# EUROPÄISCHE PATENTSCHRIFT

(11) **EP 4 158 589 B1**
(45) Veröffentlichungstag und Bekanntmachung des Hinweises auf die Patenterteilung: **22.10.2025**
(21) Anmeldenummer: 21723974.8
(22) Anmeldetag: 05.05.2021
(51) Int. Cl.: G06T 7/00

(54) **VERFAHREN UND SYSTEM ZUR HERSTELLUNG EINES TEILS AUS EINEM GUSSTEIL**
METHOD AND SYSTEM FOR PRODUCING A PART FROM A CAST PART
PROCÉDÉ ET SYSTÈME DE PRODUCTION D'UNE PIÈCE À PARTIR D'UNE PIÈCE COULÉE

(30) Priorität: 01.06.2020 CN 202010485508; 19.06.2020 DE 102020003675
(43) Veröffentlichungstag der Anmeldung: 05.04.2023
(73) Patentinhaber: SEW-EURODRIVE GmbH & Co. KG, 76646 Bruchsal (DE)
(72) Erfinder: WU, Zili, TIANJIN, 300060 (CN)
(86) Internationale Anmeldenummer: PCT/EP2021/061869
(87) Internationale Veröffentlichungsnummer: WO 2021/244816

(56) Entgegenhaltungen:
- WO-A1-93/23820
- G.H. TARBOX ET AL: "IVIS: an integrated volumetric inspection system", PROCEEDINGS OF THE 1994 SECOND CAD-BASED VISION WORKSHOP: FEBRUARY 8 - 11, 1994, CHAMPION, PENNSYLVANIA, 1 January 1994 (1994-01-01), Piscataway, NJ, USA, pages 220 - 227, XP055480240, ISBN: 978-0-8186-5310-0, DOI: 10.1109/CADVIS.1994.284498
- WANCZYK K ET AL: "The Use of Rapid Prototyping Methods to Perform Flexible Pattern Mold for Compressor Turbine Casting in the Gypsum Molds", ARCHIVES OF FOUNDRY ENGINEERING,, vol. 15, no. 3, 1 January 2015 (2015-01-01), XP002763852

## Beschreibung

Die Erfindung betrifft ein Verfahren und ein System zur Herstellung eines Teils aus einem Gussteil.

Es ist allgemein bekannt, dass ein Teil durch Bearbeiten in einer Bearbeitungsmaschine aus einem Gussteil herstellbar ist.

Aus der US 2019 / 0 258 225 A1 ist ein Prüfungsverfahren bekannt.

Aus der DE 10 2008 035 710 A1 ist ein Verfahren zum selbsttätigen Zurückführen eines Werkzeugs einer programmiergesteuerten Werkzeugmaschine bekannt.

Aus der US 2016 / 0 109 876 A1 ist ein virtuelles aneinanderreihen bekannt.

Der Artikel von G. H. Tarbox et. al. , "IVIS: an integrated volumetric inspection system", Proceedings of the 1994 second CAD-based Vision Workshop, 1. Januar 1994, Seiten 220-227, ISBN: 978-0-8186-5310-0, DOI:10.1109/CADVIS.1994.284498 offenbart ein Inspektionssystem, das ein Gussteil vermisst, ein 3D-Model erstellt, die beiden vergleicht und den Unterschied graphisch darstellt.

**Aus der** WO 93/23820 A1 **ist eine Bearbeitung eines Werkstücks durch Werkzeugmaschinen** bekannt, wobei die Temperatur des Werkstück durch eine Infrarotsensor erfasst wird um die tatsächliche Größe des Werkstücks zu bestimmen.

Der Artikel von K. Wanczyk et. al., "The use of rapid prototyping methods to perform flexible pattern mold for compressor turbine casting in the gypsum molds", Archives of Foundry Engineering, Band 15, Nr. 3, 1. Januar 2015 offenbart die farbliche Darstellung eines vermessenen Turbinenteils, wobei die farbliche Darstellung den kürzesten Abstand eines Polygons des Turbinenteils zu der Oberfläche des CAD-Models veranschaulicht.

Der Erfindung liegt daher die Aufgabe zugrunde, eine effiziente Herstellung eines Teils weiterzubilden.

Erfindungsgemäß wird die Aufgabe bei dem Verfahren nach den in Anspruch 1 und bei dem System nach den in Anspruch 8 angegebenen Merkmalen gelöst.

Wichtige Merkmale der Erfindung bei dem Verfahren sind, dass das Verfahren zur Herstellung eines Teils aus einem Gussteil vorgesehen ist,
wobei in einem ersten Verfahrensschritt ein 3D-Konstruktionsmodell für ein Teil, insbesondere Getriebegehäuseteil, erstellt wird und in einem Rechner abgespeichert wird,
wobei in einem zweiten Verfahrensschritt das Gussteil durch Gießen hergestellt wird,
wobei in einem dritten Verfahrensschritt das Gussteil mit einem 3D-Scanner gemessen wird und aus den dabei erfassten Messdaten ein 3D-Modell des Gussteils bestimmt wird,
in einem vierten Verfahrensschritt Abweichungen zwischen dem 3D-Modell und dem 3D-Konstruktionsmodell bestimmt und dargestellt oder angezeigt werden, insbesondere auf einem Bildschirm oder durch Ausdrucken insbesondere auf einem Papier dargestellt oder angezeigt werden, insbesondere zweidimensional.

Insbesondere werden das 3D-Modell und das 3D-Konstruktionsmodell im Rechner überlagert und dabei der Schwerpunkt und/oder Mittelpunkt in Deckung gebracht wird und auch die relative räumliche Drehung in Übereinstimmung gebracht wird.

Von Vorteil ist dabei, dass die Abweichungen der Istoberfläche des Gussteils zu einer Solloberfläche des 3D-Konstruktionsmodells einfach und schnell bestimmbar sind und das nachfolgende Bearbeitungsverfahren entscheidbar ist.

Zudem wird in einem dritten Verfahrensschritt die Temperatur des Gussteils erfasst,
wobei die Differenz zwischen der Temperatur und einer für die Bearbeitung des Gussteils in einer Bearbeitungsmaschine vorgesehene Solltemperatur als Temperaturdifferenz bestimmt wird,
wobei die bestimmten Abweichungen um eine durch die Temperaturdifferenz bewirkte Längenänderung korrigiert werden,
so dass die durch die Temperaturdifferenz bewirkte thermische Ausdehnung des Materials des Gussteils berücksichtigt wird. Von Vorteil ist dabei, dass die zwischen der beim Scannen vorhandenen Temperatur und der beim Bearbeiten vorgesehenen Temperatur bestehende Temperaturdifferenz und die dadurch bewirkte Längenänderung berücksichtigbar ist.

Zudem wird in einem vierten Verfahrensschritt die Abweichungen farblich an einer insbesondere zweidimensionalen Darstellung des 3D-Konstruktionsmodells dargestellt. Von Vorteil ist dabei, dass eine schnelle Erkennbarkeit der Abweichungen bewirkbar ist.

Dabei codiert der jeweilige Farbwert des jeweiligen Bildpunkts der Darstellung des 3D-Konstruktionsmodells den Abstand des 3D-Modells zum 3D-Konstruktionsmodell am jeweiligen dem Bildpunkt entsprechenden Oberflächenpunkt des 3D-Konstruktionsmodells in Normalenrichtung. Von Vorteil ist dabei, dass der Abstand eindeutig bestimmbar ist.

Bei einer vorteilhaften Ausgestaltung wird in einem fünften Verfahrensschritt
- ein erster Oberflächenbereich des 3D-Konstruktionsmodells bestimmt, bei welchem die Abweichungen alle betragsmäßig größer als ein vorgegebener Schwellwert sind,
- und ein zweiter Oberflächenbereich des 3D-Konstruktionsmodells, bei welchem die Abweichungen alle betragsmäßig kleiner oder gleich dem vorgegebenen Schwellwert sind.

Von Vorteil ist dabei, dass eine nachfolgende Bearbeitung abhängig machbar ist von der genannten Fallunterscheidung. Somit ist eine höhere Effizienz erreichbar.

Bei einer vorteilhaften Ausgestaltung wird in einem sechsten Verfahrensschritt das Gussteil bearbeitet,
wobei der erste Oberflächenbereich anders bearbeitet wird als der zweite Oberflächenbereich. Von Vorteil ist dabei, dass eine individuelle Bearbeitung der Oberflächenbereiche abhängig vom Materialüberstand ausführbar ist und somit eine effiziente Bearbeitung erreichbar ist.

Bei einer vorteilhaften Ausgestaltung wird in einem oder dem sechsten Verfahrensschritt das Gussteil bearbeitet,
wobei der erste Oberflächenbereich mit einem ersten und einem zweiten Bearbeitungsverfahren bearbeitet wird und der zweite Oberflächenbereich nur mit dem zweiten Bearbeitungsverfahren bearbeitet wird. Von Vorteil ist dabei, dass eine effiziente Bearbeitung ausführbar ist.

Bei einer vorteilhaften Ausgestaltung ist das zweite Bearbeitungsverfahren ein feineres Bearbeitungsverfahren als das erste Bearbeitungsverfahren. Von Vorteil ist dabei, dass nur dort das feinere Bearbeitungsverfahren alleine angewendet wird, wo der Materialüberstand über der Sollform, also Solloberfläche, klein genug ist.

Bei einer vorteilhaften Ausgestaltung ist das zweite Bearbeitungsverfahren eine Schleifbearbeitung durch Schlichten und das erste Bearbeitungsverfahren eine Schleifbearbeitung durch Schruppen. Von Vorteil ist dabei, dass eine Feinbearbeitung effizient ausführbar ist.

Bei einer alternativen vorteilhaften Ausgestaltung ist das zweite Bearbeitungsverfahren eine Schleifbearbeitung ist und das erste Bearbeitungsverfahren eine Fräsbearbeitung. Von Vorteil ist dabei, dass die Bearbeitung effizient und abhängig vom 3D Scannen ausführbar ist.

Wichtige Merkmale bei dem System zur Durchführung eines der vorgenannten Verfahrens sind, dass die Bearbeitungsmaschine einen mittels einer Maschinenachse, insbesondere Linearachse, der Bearbeitungsmaschine bewegbaren 3D Scanner aufweist und eine Aufnahmeeinheit zur Aufnahme des Gussteils,
wobei der 3D Scanner eine Datenverbindung zu einem Rechner der Bearbeitungsmaschine aufweist,
wobei der Rechner die Maschinenachse, insbesondere zur Vermessung des Gussteils, und weitere Maschinenachsen zur Bewegung eines oder der Werkzeuge der Bearbeitungsmaschine ansteuert.

Von Vorteil ist dabei, dass in derselben Aufspannung das Gussteil mittels 3D Scanner messbar und nachfolgend mit dem oder den Werkzeugen der Bearbeitungsmaschine bearbeitbar ist. Somit ist eine hohe Genauigkeit erreichbar.

Weitere Vorteile ergeben sich aus den Unteransprüchen.

Die Erfindung wird nun anhand von schematischen Abbildungen näher erläutert:
In der Figur 1 ist ein erfindungsgemäßes Gussteil, insbesondere Gehäuseteil für ein Industriegetriebe, schematisch in Seitenansicht skizziert.
In der Figur 2 ist ein erfindungsgemäßes System zur Herstellung eines Teils aus dem Gussteil
schematisch skizziert.

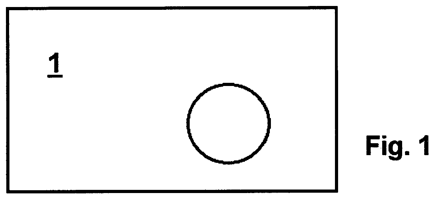

Wie in Figur 1 dargestellt, weist das Gussteil eine Lageraufnahme zur Aufnahme eines Lagers einer drehbar gelagerten Welle des Getriebes auf.

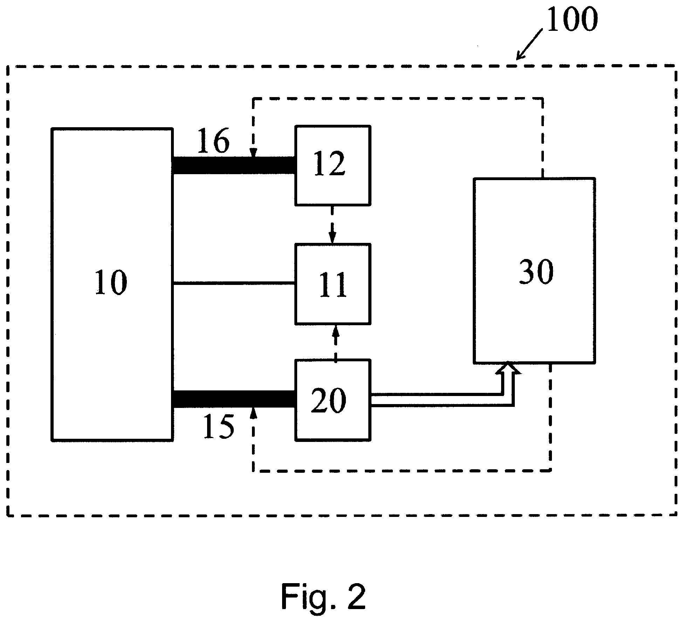

In Figur 2 ist das erfindungsgemäße System 100 mit einer Werkzeugmaschine 10 dargestellt, in deren Aufnahmeeinheit 11 das Gussteil 1 aufnehmbar und haltbar ist. Auf einer ersten Maschinenachse 15, insbesondere Linearachse, der Werkzeugmaschine 10 ist ein 3D-Scanner 20 zur Vermessung des Gussteils 1 angeordnet ist. Der 3D-Scanner ist mittels der ersten

Maschinenachse 15 zur Vermessung des Gussteils 1 bewegbar. Ein oder mehrere Werkzeuge
12 der Werkzeugmaschine 10 sind auf weiteren Maschinenachsen 16 angeordnet und mittels der weiteren Maschinenachsen 16 zur Bearbeitung des Gussteils 1 bewegbar.

Ferner umfasst das System 100 eine Steuerungseinrichtung, insbesondere einen Rechner 30, welche mittels einer Datenverbindung mit dem 3D-Scanner zur Datenübertragung verbunden ist und welche die Maschinenachsen (15, 16) der Werkzeugmaschine 10 ansteuert

Nach der Herstellung des Gussteils mittels eines Gießverfahrens wird mit einem 3D-Scanner das Gussteil vermessen.

Aus den bei dieser Messung ermittelten Messdaten, insbesondere also erfassten 3D-Messpunkten, wird ein 3D-Modell des Gussteils in einem Rechner erstellt.

Im Rechner ist aber auch ein 3D-Konstruktionsmodell des Gussteils gespeichert, das die Sollgeometrie, insbesondere also die bei Konstruktion beabsichtigte Formgebung, darstellt. In einem weiteren Verfahrensschritt werden die beiden Modelle derart zusammengebracht, dass die Abweichung des 3D-Modells vom 3D-Konstruktionsmodull bestimmt wird und farblich dargestellt wird.

Hierzu wird zunächst das 3D-Modell derart um seinen Mittelpunkt und/oder Schwerpunkt räumlich gedreht und der Schwerpunkt und/oder Mittelpunkt des 3D-Konstruktionsmodells mit dem Schwerpunkt und/oder Mittelpunkt des 3D-Modells in Deckung gebracht, dass die Summe der Quadrate der Abstände zwischen den bei der Messung ermittelten jeweiligen Messpunkten und dem jeweils nächstliegenden Oberflächenpunkt des 3D-Kontruktionsmodells minimal ist.

Danach wird zu jedem Messpunkt des 3D-Modells jeweils der Abstand zum nächstliegenden Oberflächenpunkt des 3D-Konstruktionsmodells bestimmt und dieser jeweilige nächstliegende Oberflächenpunkt mit einem Farbwert dargestellt, der eine eineindeutige Funktion des bestimmten Abstandes zum jeweiligen nächstliegenden Oberflächenpunkt liegt.

Danach wird das 3D-Konstruktionsmodell mittels eines Anzeigeelements, insbesondere Bildschirm eines Rechnersystems, als farbiges Bild dargestellt. Somit ist eine Qualitätskontrolle des durch Gießen hergestellten Gussteils in einfacher Weise ermöglicht. Beispielsweise ist auch ein Aufmaß berücksichtigbar, das im Bereich der Lageraufnahme vorhanden sein muss, da das Gussteil in diesem Bereich noch fein bearbeitet werden soll. Bei weiteren erfindungsgemäßen Ausführungsbeispielen wird abhängig vom innerhalb eines Oberflächenbereichs kleinsten Abstand die Art einer nachfolgenden, für diesen Oberflächenbereich bestimmten Bearbeitung gewählt.

Beispielsweise wird dann, wenn der kleinste Abstand innerhalb des Oberflächenbereichs größer als ein vorgegebener Schwellwert ist, als Bearbeitung zunächst eine Fräsbearbeitung und nachfolgend eine Schleifbearbeitung gewählt. Wenn hingegen der vorgegebene Schwellwert vom kleinsten Abstand innerhalb des Oberflächenbereichs unterschritten wird, wird nur eine Schleifbearbeitung gewählt.

In beiden Fällen ist bei einem weiteren Ausführungsbeispiel statt der Schleifbearbeitung eine als Schlichten ausgeführte Schleifbearbeitung und statt der Fräsbearbeitung eine als Schruppen ausgeführte Schleifbearbeitung ausführbar.

Das Gussteil ist zwar Fertigungsteil einer Serienfertigung; trotzdem ist die Bearbeitung jedes Gussteils der Serienfertigung individuell anpassbar.

Das Gussteil wird als Werkstück in einer Werkzeugmaschine aufgenommen, insbesondere auf einen Dorn aufgespannt, und der 3D-Scanner an zumindest einer Maschinenachse, insbesondere Linearachse, der Werkzeugmaschine befestigt. Auf diese Weise ist nämlich der 3D-Scanner neben dem in der Maschine aufgenommenen Gussteil verfahrbar, wobei die Position des 3D-Scanners erfasst wird und den jeweiligen Messdaten zugeordnet wird. Auf diese Weise ist eine hochgenaue und präzise Vermessung des Gussteils ermöglicht. Außerdem wird die Auswertung der Messdaten in einem Rechner, insbesondere in der Steuerung, der Werkzeugmaschine ausgeführt, wobei dieser Rechner dann auch die Entscheidung trifft, wie die Bearbeitung des Gussteils ausgeführt wird, also beispielsweise Schleifbearbeitung nur mit Schlichten oder alternativ mit Schruppen, auf welches dann ein Schlichten folgt. Da das Gussteil aufgespannt und somit im Koordinatensystem der Werkzeugmaschine fixiert angeordnet ist, ein erster Oberflächenbereich des Gussteils nur mit Schlichten und ein anderer Oberflächenbereich des Gussteils mit Schruppen, auf welches dann ein Schlichten folgt, bearbeitbar.

Im weiteren wird das Gussteil mit dem 3D-Scanner bei einer anderen, insbesondere höheren Temperatur, insbesondere beispielsweise nach einer Wärmebehandlung und/oder nach einer Härtebehandlung, vermessen, wobei die Temperatur des jeweils mit dem 3D-Scanner aufgenommenen Bereichs erfasst wird, insbesondere mittels eines Infrarot-Thermometers. Aus den mit dem 3D-Scanner erfassten Daten wird dann unter Berücksichtigung der erfassten Temperatur das 3D-Modell für eine Umgebungstemperatur, insbesondere Zimmertemperatur oder dergleichen, errechnet, also dabei die Wärmeausdehnung berücksichtigt.

### Bezugszeichenliste

1 Gussteil
10 Werkzeugmaschine
11 Aufnahmeeinheit
12 Werkzeug
15 erste Maschinenachse
16 weitere Maschinenachsen

20 3D-Scanner
30 Rechner
100 System

## Patentansprüche

1. Verfahren zur Herstellung eines Teils aus einem Gussteil,
wobei in einem ersten Verfahrensschritt ein 3D-Konstruktionsmodell für ein Teil,
insbesondere Getriebegehäuseteil, erstellt wird und in einem Rechner abgespeichert wird,
wobei in einem zweiten Verfahrensschritt das Gussteil durch Gießen hergestellt wird,
wobei in einem dritten Verfahrensschritt das Gussteil mit einem 3D-Scanner gemessen wird und aus den dabei erfassten Messdaten ein 3D-Modell des Gussteils bestimmt wird,
in einem vierten Verfahrensschritt Abweichungen zwischen dem 3D-Modell und dem 3D-Konstruktionsmodell bestimmt und dargestellt oder angezeigt werden, insbesondere auf einem Bildschirm oder durch Ausdrucken insbesondere auf einem Papier dargestellt oder angezeigt werden, insbesondere zweidimensional,
**wobei im dritten Verfahrensschritt die Temperatur des Gussteils erfasst wird,**
**wobei die Differenz zwischen der Temperatur und einer für die Bearbeitung des Gussteils in einer Bearbeitungsmaschine vorgesehene Solltemperatur als Temperaturdifferenz bestimmt wird,**
**wobei die bestimmten Abweichungen um eine durch die Temperaturdifferenz bewirkte Längenänderung korrigiert werden,**
**so, dass die durch die Temperaturdifferenz bewirkte thermische Ausdehnung des Materials des Gussteils berücksichtigt wird,**
**wobei im vierten Verfahrensschritt die Abweichungen farblich an einer insbesondere zweidimensionalen Darstellung des 3D-Konstruktionsmodells dargestellt werden,**
**wobei der jeweilige Farbwert des jeweiligen Bildpunkts der Darstellung des 3D-Konstruktionsmodells den Abstand des 3D-Modells zum 3D-Konstruktionsmodell am jeweiligen dem Bildpunkt entsprechenden Oberflächenpunkt des 3D-Konstruktionsmodells in Normalenrichtung codiert.**

2. Verfahren nach Anspruch 1,
**dadurch gekennzeichnet, dass**
in einem fünften Verfahrensschritt
- ein erster Oberflächenbereich des 3D-Konstruktionsmodells bestimmt wird, bei welchem die Abweichungen alle größer als ein vorgegebener Schwellwert sind,
- ein zweiter Oberflächenbereich des 3D-Konstruktionsmodells bestimmt wird, bei welchem die Abweichungen alle kleiner oder gleich dem vorgegebenen Schwellwert sind.

3. Verfahren nach einem der vorangegangenen Ansprüche,
**dadurch gekennzeichnet, dass**
in einem sechsten Verfahrensschritt das Gussteil bearbeitet wird,
wobei der erste Oberflächenbereich anders bearbeitet wird als der zweite Oberflächenbereich.

4. Verfahren nach einem der vorangegangenen Ansprüche,
**dadurch gekennzeichnet, dass**
in einem oder dem sechsten Verfahrensschritt das Gussteil bearbeitet wird,
wobei der erste Oberflächenbereich mit einem ersten und einem zweiten Bearbeitungsverfahren bearbeitet wird und der zweite Oberflächenbereich nur mit dem zweiten Bearbeitungsverfahren bearbeitet wird.

5. Verfahren nach einem der vorangegangenen Ansprüche,
**dadurch gekennzeichnet, dass**
das zweite Bearbeitungsverfahren ein feineres Bearbeitungsverfahren ist als das erste Bearbeitungsverfahren.

6. Verfahren nach einem der vorangegangenen Ansprüche,
**dadurch gekennzeichnet, dass**
das zweite Bearbeitungsverfahren eine Schleifbearbeitung durch Schlichten ist und das erste Bearbeitungsverfahren eine Schleifbearbeitung durch Schruppen.

7. Verfahren nach einem der Ansprüche 1 bis 5,
**dadurch gekennzeichnet, dass**
das zweite Bearbeitungsverfahren eine Schleifbearbeitung ist und das erste Bearbeitungsverfahren eine Fräsbearbeitung.

8. System (100) zur Durchführung des Verfahrens nach einem der vorangegangenen Ansprüche,
wobei das System (100) eine Bearbeitungsmaschine (10) aufweist,
wobei
die Bearbeitungsmaschine (10) einen mittels einer Maschinenachse (15), insbesondere Linearachse,
der Bearbeitungsmaschine (10) bewegbaren 3D Scanner (20) aufweist und eine Aufnahmeeinheit (11) zur Aufnahme des Gussteils (1),
wobei der 3D Scanner (20) eine Datenverbindung zu einem Rechner (30) der Bearbeitungsmaschine (10) aufweist,
wobei der Rechner (30) die Maschinenachse (15), insbesondere zur Vermessung des Gussteils (1), und
weitere Maschinenachsen (16) zur Bewegung eines oder der Werkzeuge (12) der Bearbeitungsmaschine (10) ansteuert.

## Claims

1. A method for producing a part from a casting,
wherein in a first method step a 3D design model for a part, in particular gear unit housing part, is created and stored in a computer,
wherein in a second method step the casting is produced by a casting operation,
wherein
in a third method step the casting is measured using a 3D scanner and a 3D model of the casting is determined from the measurement data thus acquired,
in a fourth method step deviations between the 3D model and the 3D design model are determined and represented or displayed, in particular on a screen or by printing out, in particular are represented or displayed on paper, in particular two-dimensionally,
wherein in the third method step the temperature of the casting is acquired,
wherein the difference between the temperature and a setpoint temperature provided for the machining of the casting in a machining centre is determined as the temperature difference,
wherein the deviations determined are corrected by a change in length brought about by the temperature difference,
such that the thermal expansion of the material of the casting brought about by the temperature difference is taken into account,
wherein in the fourth method step the deviations are represented in colour on an in particular two-dimensional representation of the 3D design model,
wherein the respective colour value of the respective pixel of the representation of the 3D design model encodes the distance of the 3D model from the 3D design model on the respective surface point of the 3D design model which corresponds to the pixel in the normal direction.

2. A method according to claim 1,
**characterised in that**
in a fifth method step
- a first surface region of the 3D design model is determined in which the deviations are all greater than a prescribed threshold value,
- a second surface region of the 3D design model is determined in which the deviations are all less than or equal to the prescribed threshold value.

3. A method according to one of the preceding claims,
**characterised in that**
in a sixth method step the casting is machined,
with the first surface region being machined differently from the second surface region.

4. A method according to one of the preceding claims,
**characterised in that**
in a or the sixth method step the casting is machined,
with the first surface region being machined using a first and a second machining method and the second surface region being machined using only the second machining method.

5. A method according to one of the preceding claims,
**characterised in that**
the second machining method is a finer machining method than the first machining method.

6. A method according to one of the preceding claims,
**characterised in that**
the second machining method is a grinding machining by fine-machining and the first machining method is a grinding machining by rough-machining.

7. A method according to one of claims 1 to 5,
**characterised in that**
the second machining method is a grinding machining and the first machining method is a milling machining.

8. A system (100) for carrying out the method according to one of the preceding claims,
wherein the system (100) has a machining centre (10),
wherein
the machining centre (10) has a 3D scanner (20) movable by means of a machine axle (15), in particular linear axle, of the machining centre (10), and a receiving unit (11) for receiving the casting (1),
wherein the 3D scanner (20) has a data connection to a computer (30) of the machining centre (10),
wherein the computer (30) controls the machine axle (15), in particular for measuring the casting (1), and further machine axles (16) for moving a or the tool(s) (12) of the machining centre (10).

## Revendications

1. Procédé de fabrication d'une pièce à partir d'une pièce coulée,
dans une première étape de procédé, un modèle de construction 3D étant créé pour une pièce, en particulier une partie carter de boîte de vitesses, et étant stocké dans un ordinateur,
dans une seconde étape de procédé, la pièce coulée étant fabriquée par coulée,
dans une troisième étape de procédé, la pièce coulée étant mesurée à l'aide d'un scanner 3D et un modèle 3D de la pièce coulée étant déterminé à partir des données de mesure ainsi enregistrées,
dans une quatrième étape de procédé, des écarts entre le modèle 3D et le modèle de construction 3D étant déterminés et représentés ou affichés, en particulier sur un écran ou par impression, en particulier représentés ou affichés sur un papier, en particulier en deux dimensions,
dans la troisième étape du procédé, la température de la pièce coulée étant enregistrée,
la différence entre la température et une température de consigne prévue pour l'usinage de la pièce coulée dans une machine d'usinage étant déterminée en tant que différence de température,
les écarts déterminés étant corrigés en fonction d'une modification de longueur provoquée par la différence de température,
de sorte que la dilatation thermique du matériau de la pièce coulée provoquée par la différence de température est prise en compte,
dans la quatrième étape de procédé, les écarts étant représentés en couleur sur une représentation en particulier bidimensionnelle du modèle de construction 3D,
la valeur de couleur respective du point d'image respectif de la représentation du modèle de construction 3D codant, dans la direction de normale, la distance entre le modèle 3D et le modèle de construction 3D au niveau du point de surface respectif, correspondant au point d'image, du modèle de construction 3D.

2. Procédé selon la revendication 1,
**caractérisé en ce que**
dans une cinquième étape de procédé
- une première région de surface du modèle de construction 3D est déterminée, pour laquelle les écarts sont tous supérieurs à une valeur de seuil prédéfinie,
- une seconde région de surface du modèle de construction 3D est déterminée, pour laquelle les écarts sont tous inférieurs ou égaux à la valeur de seuil prédéfinie.

3. Procédé selon l'une quelconque des revendications précédentes,
**caractérisé en ce que**
dans une sixième étape de procédé, la pièce coulée est usinée,
la première région de surface étant traitée différemment de la seconde région de surface.

4. Procédé selon l'une quelconque des revendications précédentes,
**caractérisé en ce que**
dans une ou la sixième étape de procédé, la pièce moulée est usinée,
la première région de surface étant traitée avec des premier et second procédés de traitement et la seconde région de surface n'étant traitée qu'avec le second procédé de traitement.

5. Procédé selon l'une quelconque des revendications précédentes,
**caractérisé en ce que**
le second procédé d'usinage est un procédé d'usinage plus fin que le premier procédé d'usinage.

6. Procédé selon l'une quelconque des revendications précédentes,
**caractérisé en ce que**
le second procédé d'usinage est un usinage par polissage pour finition lisse et le premier procédé d'usinage est un usinage par polissage pour finition rugueuse.

7. Procédé selon l'une quelconque des revendications 1 à 5,
**caractérisé en ce que**
le second procédé d'usinage est un usinage par polissage et le premier procédé d'usinage est un usinage par fraisage.

8. Système (100) permettant la mise en œuvre d'un procédé selon l'une quelconque des revendications précédentes,
le système (100) présentant une machine d'usinage (10),
la machine d'usinage (10) présentant un scanner 3D (20) pouvant être déplacé au moyen d'un axe de machine (15), en particulier au moyen d'un axe linéaire, de la machine d'usinage (10), et une unité d'accueil (11) permettant d'accueillir la pièce coulée (1),
le scanner 3D (20) présentant une connexion de données vers un ordinateur (30) de la machine d'usinage (10),
l'ordinateur (30) commandant l'axe de la machine (15), en particulier afin de mesurer la pièce coulée (1), et
d'autres axes de machine (16) afin de déplacer un ou plusieurs outil(s) (12) de la machine d'usinage (10).
